Europäisches Patentamt

European Patent Office

Office européen des brevets

(11) Publication number: **0 445 086 A1**

# EUROPEAN PATENT APPLICATION

(21) Application number: **91830064.1**

(22) Date of filing: **26.02.91**

(51) Int. Cl.⁵: **A01K 87/02**

(30) Priority: **02.03.90 IT 1940490 U**

(43) Date of publication of application:
**04.09.91 Bulletin 91/36**

(84) Designated Contracting States:
**AT BE CH DE DK ES FR GB GR LI LU NL SE**

(71) Applicant: **Venturi, Guiseppe**
**Via Nuova**
**I-06039Trevi (PG)(IT)**

Applicant: **Benincasa, Giampiero**
**Via Monte Grappa, 4**
**I-06034 Foligno (PG)(IT)**

Applicant: **Notari, Daniele**

**Fraz. Colle San Lorenzo**
**I-06039 Trevi (PG)(IT)**

(72) Inventor: **Venturi, Guiseppe**
**Via Nuova**
**I-06039Trevi (PG)(IT)**
Inventor: **Benincasa, Giampiero**
**Via Monte Grappa, 4**
**I-06034 Foligno (PG)(IT)**
Inventor: **Notari, Daniele**
**Fraz. Colle San Lorenzo**
**I-06039 Trevi (PG)(IT)**

(74) Representative: **Baldi, Claudio**
**Piazza Ghislieri, 3**
**I-60035 Jesi (Ancona)(IT)**

(54) **Pair of friction elements for blocking extractable truncated-cone sections of telescopic fishing rods.**

(57) This invention relates to a pair of friction parts (1,3), for a telescopic fishing rod with extractable truncated-cone sections, which fix the rod sections at any point of extraction.

FIG. 1

This application for a utility design patent relates to a pair of friction parts, for fitting on a telescopic fishing rod with extractable truncated-cone sections, which fix the latter at any point of extraction.

This invention was developed after careful observation of river fishing methods - especially trout fishing - and of the problems related to using standard fishing rods.

River fishing is often carried out in thick vegetation which makes it impossible to use - when throwing or pulling in the line - the full length of the fishing rod; this forces the fisherman to lengthen or shorten the range of his fishing rod continuously by adjusting the telescopic sections according to his fishing requirements.

It is common knowledge that a telescopic rod consists of a number of sections whose cross-sections decrease gradually from the top to the handle; when the rod is not used the sections telescope into each other starting from the smaller sections, until they all fit into the handle. When the rod is used, all the sections, starting from the one with the narrowest cross-section, are pulled out from the larger sections in which they are housed.

Fishing rods of this type have friction parts inside between the various telescopic sections: these parts balance and centre the longitudinal run of each telescopic section with respect to the larger one following it as well as allowing each part to be fixed into place in extracted position with respect to the previous section.

The first of these friction parts is a guide bushing fitted outside the bottom end of each telescopic section and whose width is about the same as that of the internal sides of the telescopic section in which it slides; the second friction part is a cup - fitted at the top of each section of the telescopic rod - which has a through hole at the centre whose width is about the same as that of the thickness of the next narrower section of rod than the section supporting it.

These friction parts are very useful in fishing rods where each telescopic section has the same thickness from the bottom to the top; in these cases in fact, each section of the rod - thanks to its constant cross-section and regardless of the length which is extracted - is subjected to the friction caused by the above parts, which stops it from falling into the previous larger section of rod.

It is easy to understand that in the case of a telescopic rod with cylindrical parts of this kind the fisherman can extend the rod safely, as he may require; this, in theory, would make it seem to be the most suitable type of rod for river fishing.

It should be noted however that despite these advantages, the telescopic fishing rod with cylindrical sections has a number of disadvantages which make it difficult to use for river fishing.

It is in fact extremely tiring for the fisherman who has to hold it for long periods of time; this negative characteristic derives from the fact that each of its cylindrical sections has a barycentre which is a considerable distance from the section that supports it. This means that a rod of this type is always - even when its telescopic sections are not fully extracted - rather unbalanced with its top end pulling down, so that the fisherman has to continuously pull up the end from the handle.

Another factor which contributes to increasing the weight of the rod - and consequently also the problems of the fisherman - is the tendency to make the sides of the cylindrical sections of this type of rod, quite thick in order to increase its rigidity.

In view of the problems related to the use of telescopic fishing rods with cylindrical sections, the use of telescopic fishing rods with truncated-cone sections, was considered: in these, the cross-section of each extractable section, decreases from the bottom to the top.

This version of the telescopic fishing rod is in fact easier to use since much less effort is required in using this.

The reason is that the barycentre of each section of these rods is - thanks to its tapered cross-section - further back, thus making it easier to balance the rod.

It should be noted that, at least until now, no one has ever seriously considered the use of a telescopic rod with truncated-cone sections for river fishing, simply because in all the models currently available, the extractable sections can only be fixed with respect to the larger sections, when the rod is extracted fully, namely when the wide bottom end of a narrower section forces against the internal top opening of the next larger part.

In other words, the size of this opening is such that the part acts only on the section with the larger cross-section of the sliding part; there is no way of fixing it along the intermediate sections of this part.

The purpose of this invention which was developed on the basis of the above observations, is to produce a telescopic rod with truncated-cone parts in which it is possible to extract and fix the single telescopic sections in different positions besides the end of the run.

The attainment of this result is considered to be an important technical development since thanks to this invention it is now finally possible to use these practical truncated-cone fishing rods, even among vegetation, with a range of use which no longer necessarily corresponds to the maximum extension of the rod.

The invention solution adopted was to use special friction parts at the base and at the top of each truncated-cone section of these telescopic rods so that the extension of each telescopic section - regardless of the length extracted with respect to the element containing it - involves a certain forcing, which on one hand ensures a more balance longitudinal extension and on the other, guarantees its stability and safe use in any situation.

For major clarity the description of the invention continues with reference to the enclosed drawings, intended for illustrative purposes and not in a limiting sense, where:

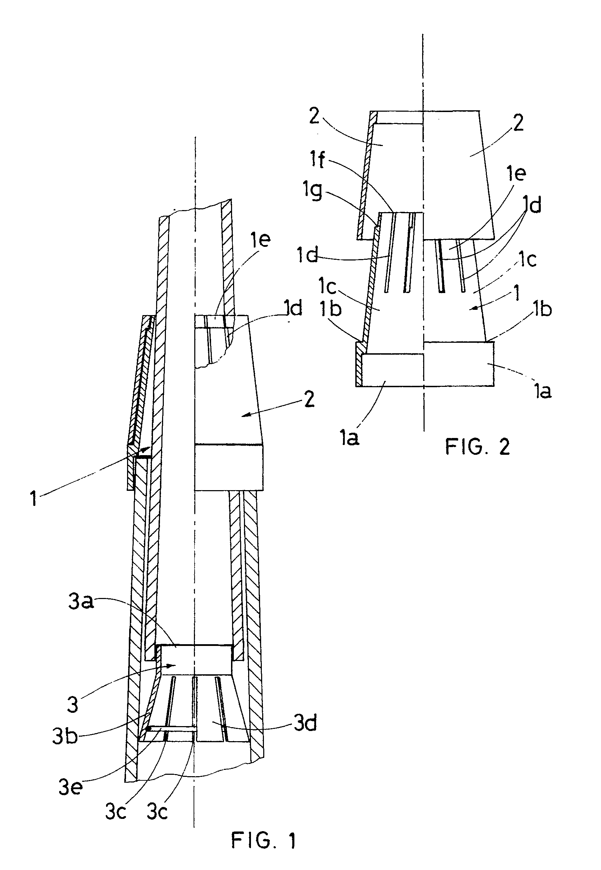

- figure 1 is half of a view and half of cross-section of a section of the telescopic rod using the above friction parts;
- figure 2 is half of a view and half of a cross-section of the cup installed at the top of each telescopic section of the rod in question.

With reference to the enclosed drawings, the fishing rod in question is characterized by two friction parts, positioned respectively at the opposite ends of each of its truncated-cone telescopic sections.

In particular, the first friction part consists of an upside-down cup (1) fitted at the mouth of each telescopic section of the rod - with exception obviously of the top end - whose purpose is to grasp and hold the telescopic section inside the same, in any position it is extracted; the second friction part consists of a funnel cap (3) fitted at the rear end of each telescopic section - namely the part sliding inside the next larger section of rod - whose purpose is to balance the longitudinal runs.

The above upside-down cup (1) is made of nylon or a similar material and consists of a circular base collar (1a) which is forced around the mouth of the respective rod section; this collar (1a) is joined by means of a concentric step (1b) to a tapered truncated-cone coupling sleeve (1c).

This sleeve (1c) has a number of longitudinal slots (1d) which form a number of identical elastic tabs (1e) on its side walls.

These tabs (1e) delimit the top hole (1f) on the sleeve (1c); their inclination inwards allows them to tend spontaneously and rather firmly towards the centre of the sleeve (1c), while their elasticity allows them to widen under the force of a suitable pressure.

In particular, this widening occurs when the truncated-cone section housed inside the section of the rod on which each sleeve (1c) is fitted, is pulled out through the hole (1f); the widening force against these tabs (1e) increases as the internal telescopic section is pulled out, as a result of the increasing diameter from the narrow top part to its wide bottom part.

Even though the sleeve (1c) can adapt to the different cross-sections of the telescopic rod sliding inside it, the sleeve (1c) must however create a certain pressure on the external walls of the same in that only in this way will it be able to hold any point of the telescopic truncated-cone section inside the same, as it is extracted.

In other words, the diameter of the hole (1f) of each sleeve (1c) is such that - even when the rod is completely pulled in - the same can quite firmly hold the narrow top end of the telescopic section inside.

As this section is extracted however, the mouth of this hole (1f) can widen gradually so as to adjust its width to the growing size of the passing section of the truncated-cone section of the rod inside, while ensuring a uniform and firm pressure on the external walls of the same.

It should be observed that in order to increase the resistance to the widening of the tabs (1e) and their tendency to constantly and firmly move to the centre of the sleeve (1c), a rubber cap (2) is fitted on the sleeve (1c); this rubber cap (2) holds and covers the slotted walls of the sleeve (1c), with its bottom edge resting over the external perimeter step (1b) which couples the collar (1a) to the sleeve (1c), while its top mouth is above another step (1g) at the external top end of each tab (1e) of the sleeve (1c).

The second friction part on the fishing rod according to the invention, consists of a funnel-shaped plug (3) fitted on the rear hollow end of each telescopic section of the rod, with exception of the large section for the handle, whose bottom part is obviously closed.

This plug (3) - also made of nylon or a similar material - has a short cylindrical body (3a) which fits inside the hollow end of each telescopic section of the rod; a truncated-cone body (3b) projects from the plug (3); this truncated-cone body (3b) has walls which open towards the bottom having several longitudinal slots - from bottom to top - spaced at equal distances from each other (3c) forming a number of identical elastic tabs (3d).

The widening and slotted sides of the truncated-cone body (3b) form the actual friction part, in that their sizes and shapes are such that they constantly and elastically open outwards, so as to interfere - from top to bottom and always rather firmly - against the internal walls of the telescopic section in which this body (3b) completes alternating vertical runs.

Obviously, in order to obtain this effect, inside each telescopic section of the rod, there must be a body (3b) having suitable widening walls whose size - in normal widened position - is larger than the maximum transverse cross-section of the telescopic section housing the same.

In fact, the walls of the body (3b) - thanks to the fact that they consist of a number of adjacent and independent tabs (3d) - can vary their inclination elastically according to the pressure on these by the internal walls of the telescopic section of the rod in which it slides; in the narrowest point of this rod section, these walls will be almost vertical while in the widest part of the rod section, they will be almost completely open.

In both these positions, and in any other intermediate position, the slotted walls of the body (3b) can exercise the same, uniform and balanced friction against the internal walls of the respective housings in which they slide, to ensure a constant and perfect coaxiality between the different telescopic sections of the rod according to the invention.

In order to guarantee major elasticity to the tabs (3d), there is an open ring (3e) inside the body (3b), housed inside a similar annular groove along the internal edge of the tabs (3d).

## Claims

1. A pair of friction parts for fixing the extractable truncated-cone sections of telescopic fishing rods characterized in that the same consist of:
   - an upside-down cup (1), made of nylon or a similar material, positioned at the mouth of each telescopic section of the rod, consisting of a circular base collar (1a) coupled - thanks to a concentric step (1b) - to a truncated-cone sleeve (1c) above it,having a number of longitudinal slots (1d) extending from top to bottom and forming a series of identical tabs (1e) - slanted inwards and characterized by a certain elasticity - delimiting the top hole (1f) on this sleeve (1c); a rubber cap (2) is fitted over the sleeve (1c), which holds and perfectly covers the slotted walls of this sleeve (1c), and whose bottom edge rests on the external perimeter step (1b) joining the collar (1a) to the sleeve (1c) while its top mouth is over another step (1g) at the external top end of each tab (1e) of the sleeve (1c);
   - a funnel-shaped plug (3), made of nylon or a similar material, fitted on the hollow back end of each telescopic section of the rod; this plug (3) has a short cylindrical body (3a) - which slides inside the hollow end section of each telescopic section of the rod - from which (3) a truncated-cone body (3b) projects; this truncated-cone body (3b) has walls which widen at the bottom, having - from top to bottom - a number of longitudinal slots (3c) spaced at the same distance from each other forming a series of identical elastic tabs (3d) whose elasticity is increased by the application of an open ring (3e) fitted inside the body (3b) in a specially designed annular groove.

FIG. 1

FIG. 2

European
Patent Office

**EUROPEAN SEARCH
REPORT**

Application Number

**EP 91 83 0064**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | FR-A-1 491 257 (LA CANNE A PECHE) <br> * page 1, right column, line 14 - line 39; figures 1-3 * <br> – – – | 1 | A 01 K 87/02 |
| Y | FR-A-2 031 863 (H. GARBOLINO) <br> * page 6, line 23 - line 33; figure 5 * <br> – – – | 1 | |
| A | FR-A-2 082 470 (LA CANNE A PECHE) <br> * page 2, line 6 - line 22; figures 1,2 * <br> – – – | 1 | |
| A | FR-A-2 064 581 (R.J.A. VIGIER) <br> – – – | | |
| A | FR-A-1 390 608 (LA MECANIQUE HALIEUTIQUE) <br> – – – – – | | |

TECHNICAL FIELDS
SEARCHED (Int. Cl.5)

A 01 K

The present search report has been drawn up for all claims

| Place of search | Date of completion of search | Examiner |
|---|---|---|
| The Hague | 03 June 91 | MARANGONI G. |